(19) **Europäisches Patentamt European Patent Office Office européen des brevets**

(11) **EP 3 526 468 B1**

(12) **EUROPEAN PATENT SPECIFICATION**

(45) Date of publication and mention
of the grant of the patent:
**29.05.2024 Bulletin 2024/22**

(21) Application number: **16823498.7**

(22) Date of filing: **21.12.2016**

(51) International Patent Classification (IPC):
**F03D 1/06** (2006.01)

(52) Cooperative Patent Classification (CPC):
**F03D 1/0675; F05B 2280/5001; Y02E 10/72**

(86) International application number:
**PCT/US2016/067982**

(87) International publication number:
**WO 2018/118039 (28.06.2018 Gazette 2018/26)**

(54) **WIND TUBINE BLADE WITH VARIABLE DEFLECTION-DEPENDENT STIFFNESS**

WINDTURBINENSCHAUFEL MIT VARIABLER AUSLENKUNGSABHÄNGIGER STEIFIGKEIT

PALE D'ÉOLIENNE À RIGIDITÉ VARIABLE DÉPENDANT DE LA DÉVIATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.08.2019 Bulletin 2019/34**

(73) Proprietor: **Siemens Gamesa Renewable Energy A/S**
**7330 Brande (DK)**

(72) Inventors:
• **MAILLY, Luis**
**Lafayette, Colorado 80026 (US)**

• **MULLINGS, Justin L.**
**Golden, Colorado 80403 (US)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**US-A1- 2013 101 428     US-A1- 2013 108 453**
**US-A1- 2014 348 651     US-A1- 2016 201 645**

**Description**

FIELD OF THE INVENTION

The invention relates to a structural member that initially exhibits a certain resistance to deflection resulting from bending, and then exhibits an increased resistance to further deflection. In particular, the invention relates to a wind turbine blade that includes the structural member.

BACKGROUND OF THE INVENTION

Wind turbine variable speed operation and low-solidity rotors (driven by mass-constraints) lead to overlaps between exciting frequencies (and their harmonics) and blade resonant frequencies. Operational constraints are employed to avoid the overlapping frequencies, but this reduces annual energy production.

Blade design includes stiffness requirements that limit deflection under extreme loads to meet material ultimate strain and tower clearance parameters. To avoid the overlap while meeting stiffness requirements, stiff, heavy designs have been pursued to get 'above' exciting frequencies while maintaining flapwise stiffness for extreme events. Alternately, additional mass has been added to get below exciting frequencies while maintaining flapwise stiffness. However, limiting flapwise deflection can result in increased fatigue loading. Consequently, various active and passive control methods have been proposed to reduce aerodynamic fatigue loads and extreme loads. One prior art example of such methods is disclosed in US2013108453 A1. Nonetheless, there remains room in the art for reducing fatigue loading while meeting material ultimate strain and tower clearance requirements.

BRIEF DESCRIPTION OF THE DRAWINGS

The invention is explained in the following description in view of the drawings that show:

FIG. 1 is a schematic cross section of an example embodiment of a structural member in an undeflected state.
FIG. 2 shows the structural member of FIG. 1 bent slightly in a first direction.
FIG. 3 shows the structural member of FIG. 2 bent further in the first direction.
FIG. 4 shows the structural member of FIG. 1 bent further in a second direction.
FIGs. 5-6 show a spar assembly that includes another example embodiment of the structural member
FIG. 7 shows a different spar assembly that include the example embodiment of the structural member of FIGs. 5-6.
FIG. 8 shows a wind turbine blade that includes yet another example embodiment of the structural member.
FIGs. 9-11 show an example embodiment of another type of structural member.
FIG. 12 shows an example embodiment of yet another type of structural member.
FIG. 13 shows an example embodiment of still another type of structural member.

DETAILED DESCRIPTION OF THE INVENTION

The present inventors have devised a unique and innovative structural member that initially provides a certain resistance to deflection, and then exhibits an increased resistance to further deflection. The structural member can be incorporated into a wind turbine blade to provide this deflection-dependent stiffness in response to flap deflection and/or edge deflection.

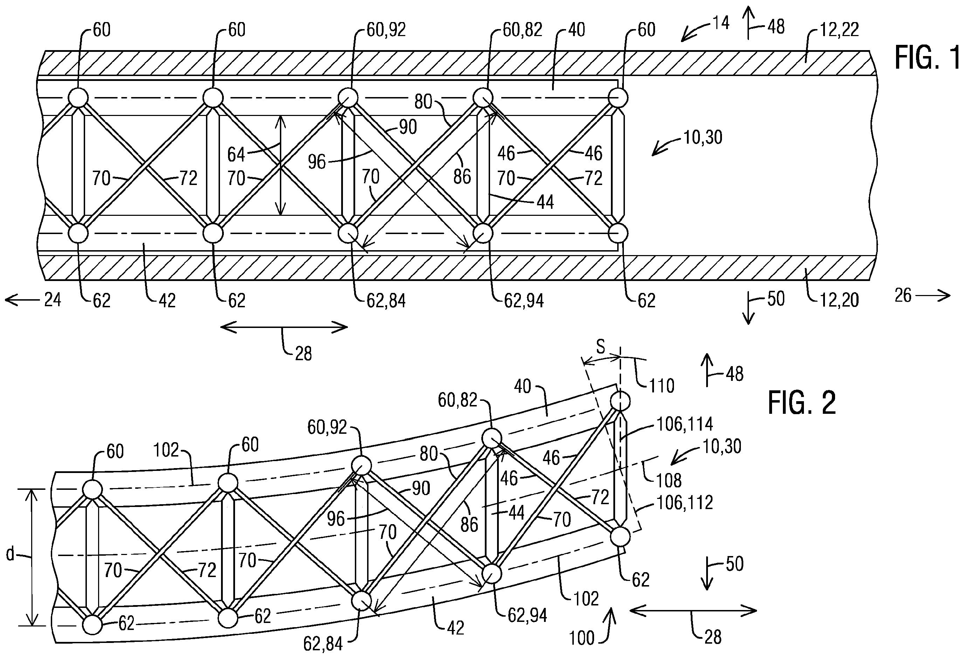

FIG.1 is a schematic cross section of an example embodiment of a structural member 10 disposed inside a wind turbine blade 12 when the wind turbine blade 12 is in an undeflected state 14. The wind turbine blade 12 includes a pressure side 20, a suction side 22, a base 24 (not visible) and a tip 26 (not visible) and the structural member 10 extends along a spanwise direction 28 and serves as a spar assembly 30. A conventional spar assembly includes a pressure side spar cap, a suction side spar cap, and a spar web connected there between. The spar web avoids vertical and horizontal relative displacement of the spar caps ensuring that the structure deforms under bending essentially as a single beam member. In contrast, the spar assembly 30 disclosed herein includes a first stringer 40, a second stringer 42, a rigid tie 44, and a tension tie 46.

The rigid ties 44 can withstand tensile and compressive forces experienced during blade operation to ensure the first stringer 40 and the second stringer 42 maintain separation from each other. This ensures that the pressure side 20 and/or the suction side 22 of the wind turbine blade 12 do not deform relative to each other during operation, particularly if the wind turbine blade 12 experiences flap deflection in a first direction 48 and in a second direction 50.

In the example embodiment shown, the rigid ties 44 are pivotally secured to the first stringer 40 and also pivotally secured to the second stringer 42 at respective first pivoting support locations 60 and second pivoting support locations 62. As illustrated in FIG. 1, pivotally secured means that the rigid ties 44 are at least free to rotate both clockwise and counterclockwise relative to the stringers 40, 42 within a plane defined by the page in FIG. 1. In some embodiments, pivotally secured includes free to rotate about a respective location 60, 62 in any direction, such as in a ball and socket joint. With the pivotally secured connection, deflection of the first stringer 40 and the second stringer 42 results in rotation of the rigid ties 44 with respect to the respective first locations 60 and second locations 62. As a result, a shortest distance 64 between the first stringer 40 and the second stringer 42 may vary and is expected to vary during deflection 48, 50 of the wind turbine blade 12.

Tension ties 46 include first tension ties 70 that resist deflection in the first direction 48 and second tension ties 72 that resist deflection in a second direction 50. The tension ties 46 provide tensile force during deflection. A tension tie 46 may be a single component (e.g. a cable) or it may be an assembly of components.

As is shown in FIG.s 2-4, the structural member 10 disclosed herein takes advantage of what happens when the first stringer 40 and the second stringer 42 bend. Like all first tension ties 70, a representative first tension tie 80 is secured to the first stringer 40 at a first stringer location 82, and to the second stringer 42 at a second stringer location 84. A distance 86 between the first stringer location 82 and the second stringer location 84 increases as the wind turbine blade 12 experiences deflection from the undeflected state 14 and in the first direction 48. This is a lateral displacement between the stringers 40, 42 in one direction that is usually inhibited by a relatively heavy spar web in a conventional spar assembly. Like all first tension ties 70, the representative first tension tie 80 resists this increase in distance 86.

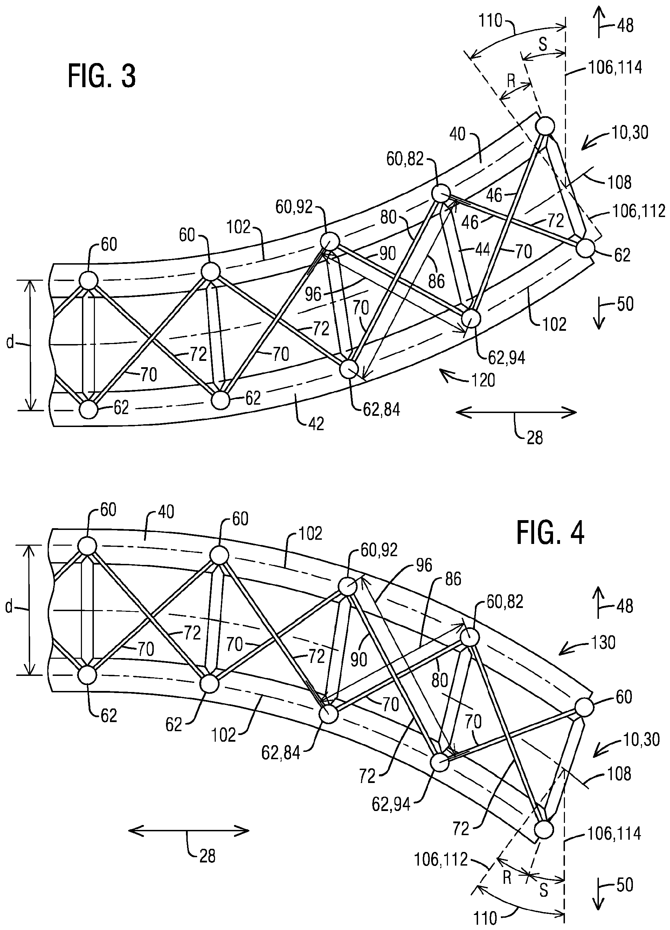

This tensioning of the tension ties 46 engages the longitudinal stiffness of the stringers to resist the bending deformation, thereby resisting the deflection in the first direction 48. For example, for the deflection shown in FIG. 2, once the representative first tension tie 80 tensions, the first stringer 40 begins to experience compression and the second stringer 42 begins to experience tension. The compression response of the first stringer 40 and the tension response of the second stringer 42 then primarily influence the bending stiffness of the structural member 10 upon further deflection. The tension ties 46 are relatively very stiff (i.e. theoretically infinitely stiff). The stiffness of the tension ties 46 does not numerically add to the bending stiffness of the structural member 10 in a meaningful way. The tension ties 46 shift the shear load to the stringers, where it becomes a longitudinal load. The same principles apply for deflection in the second direction 50 as shown in FIG. 4.

In an alternate example embodiment, the tension ties 46 are not characterized by a stiffness that is relatively very high (e.g. theoretically infinite) when compared to the longitudinal stiffness of the stringers 40, 42. In this alternate example embodiment the tension in the tension ties 46 causes the tension ties 46 to elongate, and this contributes to the stiffness response of the structural member 10. In such an alternate example embodiment, during flap deflection the stringers 40, 42 would experience tensile and compressive deformation, and the tension ties 46 would also experience non negligible tensile elongation. When compared to the example embodiment where the tension ties 46 are theoretically infinitely stiff, this alternate example embodiment would be less stiff. Discussion herein primarily addresses the embodiment having theoretically infinitely stiff tension ties 46, but alternate embodiments with non-infinitely stiff tension ties 46 are considered to be within the scope of the disclosure.

Likewise, like all second tension ties 72, a representative second tension tie 90 is secured to the first stringer 40 at a first stringer location 92, and to the second stringer 42 at a second stringer location 94. A distance 96 between the first stringer location 92 and the second stringer location 94 increases as the wind turbine blade 12 experiences deflection from the undeflected state 14 and in the second direction 50. This is a lateral displacement between the stringers 40, 42 in the opposite direction that is usually inhibited by the relatively heavy spar web in the conventional spar assembly. Like all second tension ties 72, the representative second tension tie 90 resists this increase in distance 96, which engages the longitudinal stiffness of the stringers to resist the bending deformation in the second direction 50.

During deflection in the first direction 48, distance 86 increases but distance 96 decreases. Conversely, during deflection in the second direction 50, distance 86 decreases but distance 96 increases.

Unlike a conventional truss, the structural member 10 disclosed herein is configured to provide increasing resistance to deflection, and to increase the resistance in a nonlinear way. That is to say, the structural member 10 constrains the horizontal (as shown in FIGs. 1-4) relative movement between the stringers (e.g. the spar-caps), and also the bending-response of the structural member 10, depending on the amount of deflection of the structural member 10.

A tensile tie response curve is a plot of an amount of elongation of the tension ties 46 along an X-axis (elongation increasing to the right) and the resistance force generated by the tension ties 46 along the Y-axis (force increasing in the upward direction). The tensile tie response curve describes the force response of the tensile tie from the onset of tension. The tensile tie response curve (i.e. the tensile tie response) may or may not be linear. As used herein, linear means a single, straight line, e.g. a line having a single, constant slope throughout its entirety.

Stated another way, an elastic modulus of the tensile tie may be linear or nonlinear. The elastic modulus is a ratio of tensile stress to tensile strain. It measures the amount of additional force required to produce an additional unit of elongation. When the elastic modulus is linear, each additional unit of force elongates the tensile tie by a same amount as did a previous unit of additional force. When the elastic modulus is nonlinear and increases, an additional unit of force elongates the tensile tie by a lesser amount than did a previous additional unit of force. Conversely, when the elastic modulus is nonlinear and decreasing, an additional unit of force elongates the tensile tie by a greater amount than did a previous additional unit of force.

A structural member response curve is a plot of an amount of deflection/bending of the structural member along an X-axis (deflection/bending increasing to the right) and a resistance force generated by the structural member along the Y-axis (force increasing in the upward direction). The structural member response curve (i.e. the structural member response) describes the force response of the structural member from the undeflected state 14. The structural member response curve may include linear portions, but is nonlinear in that it is characterized by a slope that increases at one or more points. In an embodiment, the increase is abrupt, such as occurs when a cable transitions from being slack to being tensioned.

Stated another way, an elastic modulus of the structural member (the stiffness) increases at some point such that additional force results in less additional deflection. The increase may be abrupt.

When the structural member is disposed within a wind turbine blade, a wind turbine blade response to deflection is tied to the structural member response. The responses are not necessarily identical because the wind turbine blade includes its own structure, e.g. the blade skin, which contributes to the resistance to deflection. However, with respect to deflection, the structural member is the dominant structural member.

In some embodiments, the tension ties 46 offer no resistance to deflection up to a threshold amount of deflection. In other embodiments, the tension ties 46 offer the resistance force up to the threshold amount of deflection.

Embodiments where no initial resistance is encountered may include tension ties 46 that are slack when the structural member 10 is in the undeflected state 14 and which remain slack until the threshold amount of deflection is reached, upon which the ties 44 tension and provide a tie resistance force. Upon further deflection, the tension ties 46 act as rigid members because their stiffness is high compared to the applied shear force.. This transfers the shear load of the tension ties 46 to the stringers 40, 42 as a longitudinal load. Example tension ties 46 could include ropes, cables, chains, straps etc. made from any material that may elastically deform in response to the expected tensile loads, but does not plastically deform. In this embodiment, the structural member response is flat (i.e. the structural member has a constant stiffness) until the threshold deflection is reached and the tension ties 46 are tensioned, at which point the tension tie response increases abruptly and the structural member responds at an increased stiffness.

Alternately, embodiments that provide an initial tie resistance force up to the threshold amount of deflection may include, for example, a damper (e.g. viscous or coulomb) that generates a certain tie resistance force for deflection up to the threshold amount, and a mechanical stop that prevents further elongation of the damper there after. For deflections up to the threshold amount, the tensile tie response would be governed by a resistance response of the damper. After the threshold deflection is reached, meaning that the stop has been reached, other structure of the tension ties 46 (e.g. rope, cable, piston shaft, or other structural member) would bear the tensile load. Once tensioned, the other structure would shift the shear load to the stringers, which would bear it as respective longitudinal loads as disclosed above. Accordingly, in this embodiment, the structural member response initially includes the resistance response of the damper. It should be noted that the damper may also transmit compressive forces and correspondingly affect the structural member response during deflections in the second direction 50.

The structural member response could also include a step increase. As used herein, a step increase is an increase in the resisting stiffness without an associated increase in the amount of deflection. In an embodiment having a step increase, active control could be utilized. For example, a sensor could detect the magnitude of deflection and activate a resistance mechanism when the threshold amount of deflection is reached. The resistance mechanism may be a clamp, magnetic devise, winch etc. that resists further separation between e.g. the first stringer location 82 and the second stringer location 84. The resistance mechanism can be characterized as an instant-on mechanism in that once the threshold amount of deflection is reached, the resisting stiffness instantly appears at a given amount of deflection. This is in contrast to embodiments where the tension tie 46 is, for example, a cable, and where the resisting stiffness transitions smoothly, albeit quickly, once the tension ties 46 tension.

A member resistance force generated by the structural member includes the initial stringer bending resistance force generated by the stringers upon deflection up to the point where the tension ties 46 are engaged, plus the member bending resistance associated with compression and tension resisting forces generated by the stringers 40, 42 for further deflections subsequent to the tensioning of the ties. Accordingly, when the tensile ties 46 are slack, the structural member 10 still resists deflection via the stringer resistance force. In embodiments with a damper, the damper resistance force also contributes to the member resistance force up to the point where the tension ties 46 are tensioned. The damper dissipates energy during dynamic changes to deflection.

The structural member 10 described above will initially provide relatively reduced resistance to bending up to a certain threshold. Once this threshold is met, further deflection will be met with a disproportional increase in resistance. When used in a wind turbine blade, this permits the wind turbine blade 12 to deflect relatively readily at lower loads, which reduced stress and increases fatigue life. This also enables the blade to stiffen up once the threshold amount of deflection has been reached, which ensures the blade does not strike the tower and/or exceed the blade material's ultimate strain requirement.

Alternately, the tension tie 46 may be in tension before any deflection, and the tension may increase during the lateral displacement, such as happens when one tension tie 46 includes two tension members of different lengths, such as two cables of different lengths. The second of the two cables may be slack prior to any deflection.

The skin of the wind turbine blade must be designed to accommodate the required shear deformation when the structural member 10 is used. For example, a flexible skin could be used, or shear displacement between upper and lower shell parts at the leading and trailing edges could be permitted.

FIG. 2 shows the structural member 10 in a threshold deflected state 100 in the first direction 48. (The wind turbine blade 12 is omitted from FIGs. 2-4 for clarity). In this example embodiment, the tension ties 46 are tension-only members, e.g. cable, rope etc. In the threshold deflected state 100 the structural member 10 has deflected enough to remove slack from the first tension ties 70 because distance 86 has increased a sufficient amount. Any further deflection will require longitudinal changes in length of the stringers 40, 42, and that is governed by a change in distance 86 that occurs with greater deflection. The second tension ties 72 are slack and remain slack because distance 96 decreases with increasing deflection.

Since the first tension ties 70 have been slack up to this point, the only resistance to the deflection/bending has been provided by the stringers 40, 42. The two spar-caps deform as individual bending members without net tensile or compressive stringer forces. Accordingly, for deflections up to the threshold deflected state 100, a member bending stiffness $(EI)_{member}$ and an associated member resisting force can be calculated by the equation (which assumes identical stringers):

$$(EI)_{member} = 2 * E * I\_c$$

Where E is the longitudinal modulus of elasticity of a stringer, and I_c is the area moment of inertia of the stringer cross section relative its respective longitudinal elastic axis 102. A face line 106 is a line that is perpendicular to a centerline 108 of the structural member 10 at a selected location. A deflection angle 110 is a measure of an angle between a deflected face line 112 and an undeflected face line 114. The threshold deflection value "S" of the deflection angle 110 is a value at which the slack is removed from the tension ties 46. Deflection angle values up to the threshold deflection value may be considered soft deflection.

FIG. 3 shows the structural member 10 in a further deflected state 120 in the first direction 48. The deflection angle 110 has increased above the threshold deflection value "S" by a further deflection value "R." Deflection beyond the soft deflection may be considered rigid deflection. All further deflection from the threshold deflection value "S" to the further deflection value "R" includes the bending resistance from the stringers 40, 42 plus the resistance of the stringers 40, 42, by generating net tensile and compressive stringer-forces through inhibiting further relative lateral stringer-displacement. Accordingly, for deflections past the threshold deflected state 100 and associated threshold deflection value "S", for instances where the tensile ties 46 are considered to be infinitely stiff, the member bending stiffness $(EI)_{member}$ and the associated member resistance force can be calculated by the equation (which assumes identical stringers and identical tension ties 46):

$$(EI)_{member} = 2 * E * I\_c + 2 * E * A\_c * (d/2)^2$$

Where E is the longitudinal modulus of elasticity of a stringer, I_c is the area moment of inertia of the stringer cross section relative its respective longitudinal elastic axis 102, A_c is a cross-sectional area of each stringer, and d is the vertical distance between the longitudinal elastic axis of the two stringers.

It can be seen that once tensioned, the presence of the first tension ties 70 causes an abrupt increase in the structural member bending stiffness, thereby resisting any further deflection.

The same principle applies for deflections in the second direction 50. FIG. 4 shows the structural member 10 in a further deflected state 130 in the second direction 46. In this example embodiment the wind turbine blade 12 and the structural member 10 are symmetric about the centerline 108. Consequently, the member bending stiffness and associated member resistance force can likewise be calculated using the same equations disclosed above.

The embodiments described in FIGs. 1-4 are not meant to be limiting, but are meant to illustrate the basic principles which may be utilized in any number of ways to produce desired results. For example, there may be one or more than one tension tie 46 per structural member 10. When there are plural tension ties 46, the tension ties 46 may be identical, they may be similar but locally tuned to provide location specific responses, or they may be of an entirely different construction than other tension ties 46. For example, the tension ties 46 toward the base 24 may exhibit greater resistance forces than those toward the tip 26 to account for varying cantilever effects at different locations along the spanwise direction 28. In another example, there may be two or more cables of different length in a tension tie 46. The force response of a multi-cable tension tie would include multiple abrupt increases in resistance force as individual cables become tensioned at different times during increasing deflection.

The tension ties 46 need not all tension at the same amount of deflection. Instead, different tension ties 46 may tension before or after others. Additionally, some ties may be simple tension-only members, while others may include dampers, or combinations of tension-only members connected in series with dampers etc. Further, a tension tie 46 may optionally be a tension and compression tie. Such a tie could be disposed between, for example, the first location 60 and second location 62, and would resist a decreasing distance 86 when the first location 60 and second location 62 approach each other as occurs in the further deflected state 130 of FIG. 4. In this way, instead of just remaining slack for deflections in one of two directions, a tension/compression tie could contribute to the resisting stiffness for deflections in both directions. A damper is an example of such a tension and compression tie. In an alternate example embodiment, all or part of the tension ties 46 could be compression only-members, resulting in a tensile force-component in the rigid ties 44.

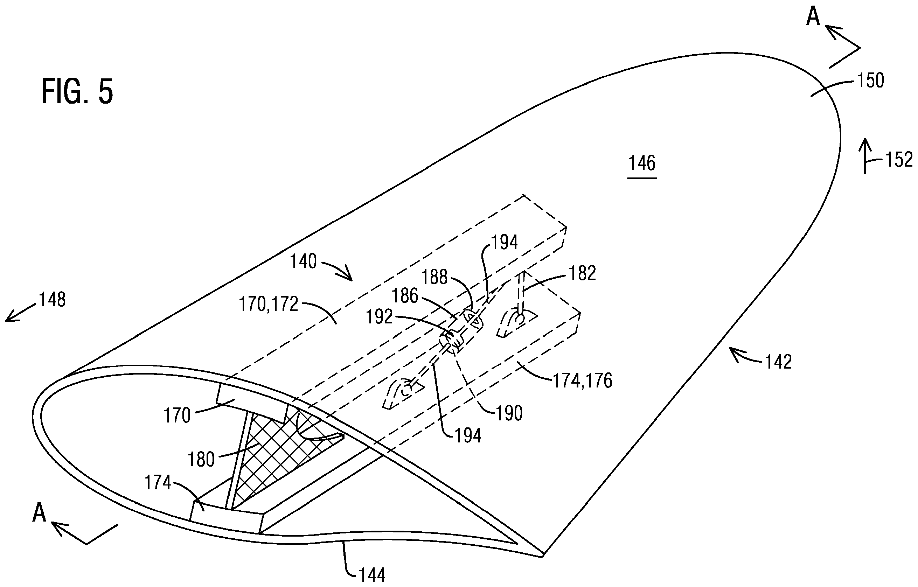

FIGs. 5-6 schematically illustrate a spar assembly 140 in a wind turbine blade 142 having a pressure side 144, a suction side 146, a base 148 (not visible), and a tip 150. Normal operation would tend to deflect the wind turbine blade 142 in the first direction 152. The spar assembly 140 integrates both a conventional spar 160 toward the base 148 and the structural member 162 toward the tip 150 into one unit as shown, though each may optionally be discrete.

The spar assembly 140 includes a first spar cap 170 that incorporates the first stringer 172, and a second spar cap 174 that incorporates the second stringer 176. The first spar cap 170 may have a uniform construction along its entire length, or its construction may vary to accommodate the first stringer 172. Likewise, the second spar cap 174 may have a uniform construction along its entire length, or its construction may vary to accommodate the second stringer 176. Towards the base 148 the first spar cap 170 and the second spar cap 174 are joined by a conventional spar web 180. Toward the tip 150 the first spar cap 170 and the second spar cap 174 are separated by the rigid tie 182 and the tension tie 184. Accordingly, the portion of the wind turbine blade 142 having the conventional spar web 180 responds in the conventional manner, while the portion of the wind turbine blade 142 toward the tip 150 having the structural member 162 responds in accord with the characteristics of the structural member 162 as disclosed above.

In the embodiment shown, the tension tie 184 includes a damper 186 having positive stops 188, 190 and a piston 192. During deflection in the first direction 152 the piston 192 moves toward the positive stop 188. Upon reaching the positive stop 188 the wind turbine blade 142 reaches the threshold deflection state. Further deflection would be resisted by the longitudinal stiffness of the spar caps 170, 174 as detailed above.

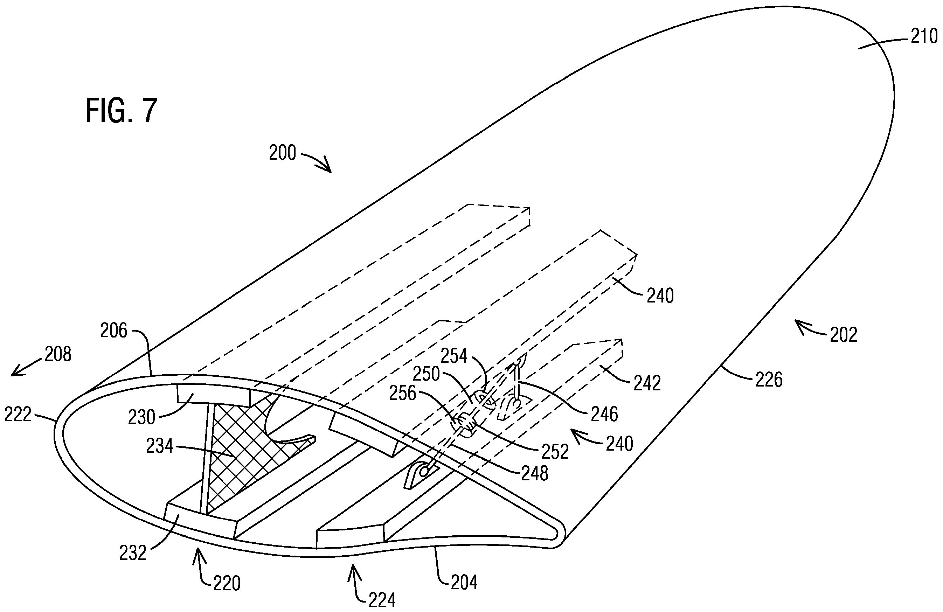

FIG. 7 schematically illustrates an alternate example embodiment of a spar assembly 200 in a wind turbine blade 202 having a pressure side 204, a suction side 206, a base 208 (not visible), and a tip 210. The spar assembly 200 may be a box spar having four sides, or two discrete spars, or a combination thereof. A forward spar 220 is disposed closer to a leading edge 222, while a rearward spar 224 is disposed closer to a trailing edge 226 of the wind turbine blade 202. In this example embodiment the forward spar 220 is a conventional spar having a forward first spar cap 230, a forward second spar cap 232, and a forward spar web 234. The rearward spar 224 includes the structural member 240 having the first stringer 242, the second stringer 244, the rigid tie 246, and the tension tie 248. The rearward spar 224 may be solely composed of the structural member 240. Alternately, the rearward spar 224 may integrate both a conventional spar 160 toward the base 208 and the structural member 240 toward the tip 210 similar to the spar assembly 140 of FIGs. 5-6. The tension tie 248 optionally includes a damper 250, a piston 252, and stops 254, 256. Flap deflection applied to a blade having this embodiment of the spar assembly 200 will result in a twist of the blade and associated pitch reaction due to the relatively greater deflection permitted by the rearward spar 224. The damper 250 and the stops 254, 256 can be tuned to achieve desired dynamic response to avoid load peaks and/or prevent bend/twist coupling resonances (e.g. flutter).

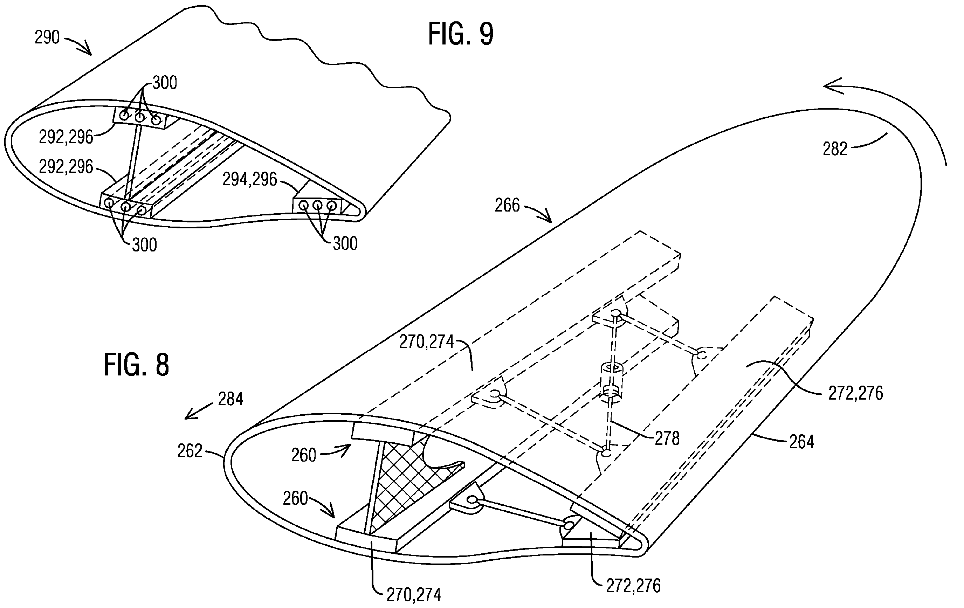

FIG. 8 schematically illustrates a different application where the structural member 260 is used to control deflection in an edgewise direction, as opposed to the flap deflection controlled in the above embodiments. Here, two structural members 260 are each oriented from a leading edge 262 to a trailing edge 264 of a wind turbine blade 266. Optionally, only one structural member 260 may be used. Each structural member 260 includes the first stringer 270 and the second stringer 272. The first stringer 270 may be the spar cap 274 as shown, or part thereof. Optionally, the first stringer 270 is discrete from the spar caps 274. The second stringer 272 is its own trailing edge reinforcement 276 as shown, or is part thereof. Optionally, the second stringers 272 are a single element that is also a common/single trailing edge reinforcement. The embodiment shown includes tension ties 278 (only one is shown for clarity) configured to resist edgewise deflection in a first direction 280 where a tip 282 of the wind turbine blade 266 deflects from the trailing edge 264 to the leading edge 262. Optionally, tension ties can be added to resist edgewise deflection in the opposite direction in accord with the disclosure above. In addition, the structural members 260 may be present throughout the entire span from a base 284 (not visible) to the tip 282, or only part of the span such as, for example, nearer the tip 282.

FIGs. 9-11 show an example embodiment of another type of structural member. This example embodiment uses structure of the wind turbine blade to provide initial resistance to bending up to the threshold amount, after which the structural member adds to the resistance, yielding a wind turbine blade with a nonlinear response.

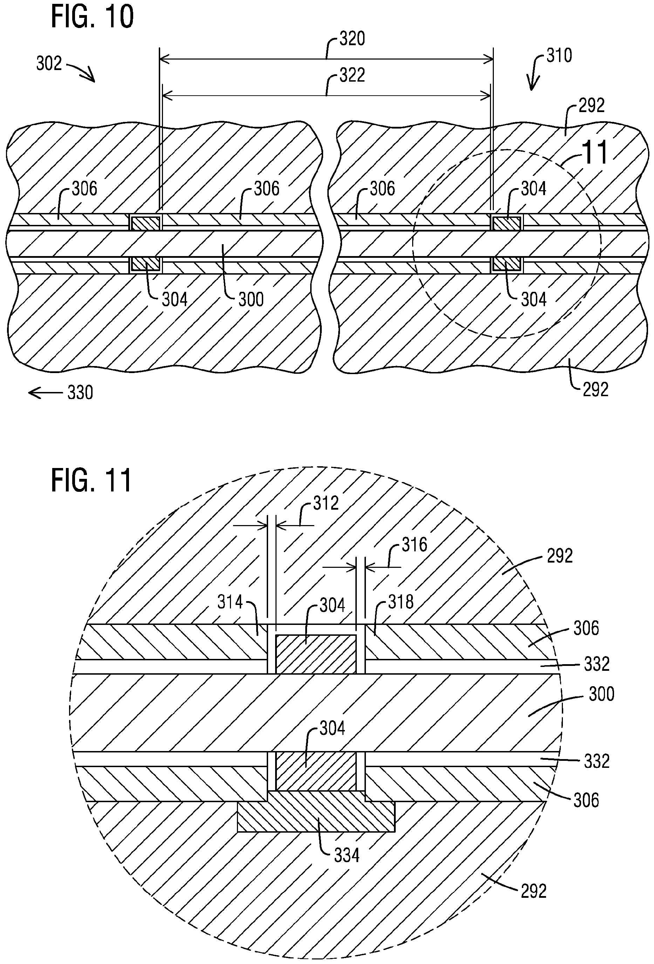

Structural members within a wind turbine blade 290 include, but are not limited to spar caps 292 and trailing edge reinforcement 294. Each of these constitutes its own structural member 296 that includes at least one stiffening element 300. These stiffening elements are located in the spanwise direction in regions subjected to tensile and compressive strain during flapwise and/or edgewise deflection. The structural members must have a significant different behavior at strains associated with normal power production and at strains associated with extreme load events. This behavior is usually not the case for material stress-strain nonlinearity (e.g. carbon fiber), but may be achieved when used in a stiffening mechanism as shown in FIG. 10.

FIG. 10 shows a stiffening mechanism 302 including the stiffening element 300 disposed in, for example, the spar cap 292. Bushings 304 are rigidly secured to the stiffening element 300, which prevents relative movement there between. Sleeves 306 are rigidly secured to the spar cap 292, which prevents relative movement there between. The stiffening element 300 may be free-floating within the sleeves 306, or may be secured at a spanwise location outside the portion shown, but a majority of the stiffening element 300 is free to move relative to the sleeve. This freedom of relative movement decouples the stiffening element 300 from the spar cap 292 so that the spar cap 292 is free to expand as a result of tensile forces and/or compress as a result of compressive forces relative to the stiffening element 300 a limited amount.

The amount of unrestrained change in length of the spar cap 229 is limited by the bushings 304. A distance 320 between the bushings 304 is greater than a length 322 of the sleeve 306 when the wind turbine blade 290 is in an undeflected state 310. If the stiffening element 300 is free floating, as the spar cap 292 expands, so does the sleeve 306. This continues until a threshold amount of expansion where a length 322 of the expanded sleeve 306 equals the distance 320 between the bushings 304. Further deflection then requires moving the bushings 304 apart, which, in turn, requires the stiffening element 300 to expand. Therefore, initial expansion of the spar cap 292 is resisted solely by the material characteristics of the spar cap 292 alone up to the threshold amount of expansion, after which the resistance of the stiffening member 300 is added, which amounts to a nonlinear response of the wind turbine blade 290.

If the stiffening element 300 is point secured at, for example, a base 330 (not visible) of the wind turbine blade 290, then expansion of the wind turbine blade 290 moves the sleeves 306 (to the right in FIG. 10) but the bushings 304 do not move. After the threshold amount of expansion/deflection, determined by a size of a gap 312, a right end 314 of the moving sleeve 306 will contact the bushing 304 to the right of the right end 314 of the sleeve 306. Further expansion/deflection will require moving the bushing 304 along with the sleeve 306. As such, as above, initial expansion of the spar cap 292 is resisted solely by the material characteristics of the spar cap 292 alone up to the threshold amount of expansion, after which the resistance of the stiffening member 300 is added, which amounts to a nonlinear response of the wind turbine blade 290. During blade deflection, sleeves 306 and bushings 304 closer to the tip of the wind turbine blade 290 may abut first because lateral displacement is greater at the free end. The more deflection that occurs, the farther down the wind turbine blade toward the base 330 the sleeves 306 and bushings 304 will abut.

The same principle applies in compression when the stiffening element 300 is point-secured. For example, a compressing spar cap 292 may move the sleeves 306 toward the base 330 (to the right in FIG. 10), but the bushings 304 do not move. After a threshold amount of compression/deflection, determined by a size of a gap 316, (FIG. 11), a left end 318 of the moving sleeve 306 will contact the bushing 304 to the left of the left end 318 of the sleeve 306. Further compression/deflection will require moving the bushing 304 along with the sleeve 306. As such, as above, initial compression of the spar cap 292 is resisted solely by the material characteristics of the spar cap 292 alone up to the threshold amount of compression, after which the resistance of the stiffening member 300 is added, which amounts to a nonlinear response of the wind turbine blade 290.

The threshold amount of expansion/compression/deflection may be selected by selecting appropriate gaps 312, 316. As with any of the concepts presented herein, these parameters may be uniform, or may be tailored for local conditions. For example, the gaps 312, 316 may be selected to permit more or less expansion and contraction at the base 330 than at a tip of the blade etc. In addition, tension-only or compression only stiffening may be achieved by alternating gap sizes.

While an abrupt change in stiffness is achieved with the structural member 296 disclosed above, a progressive change in stiffness and/or damping can be achieved with elastic or viscoelastic spacers or sheeting between stiffening element 300 and the sleeves 306. Filling a space 332 between stiffening element 300 and the sleeves 306 with a viscous fluid can also be used to achieve damping. The stiffening element 300 and the sleeves 306 may be preassembled into an airtight unit using assembly bushings 334 that ensure the precise ratio between gap-widths and load-transfer bushing length via countersunk seats for the conduits. These units can be layed up into the dry roofing or fabric material of the surrounding beam cap material in an infusion manufacture process.

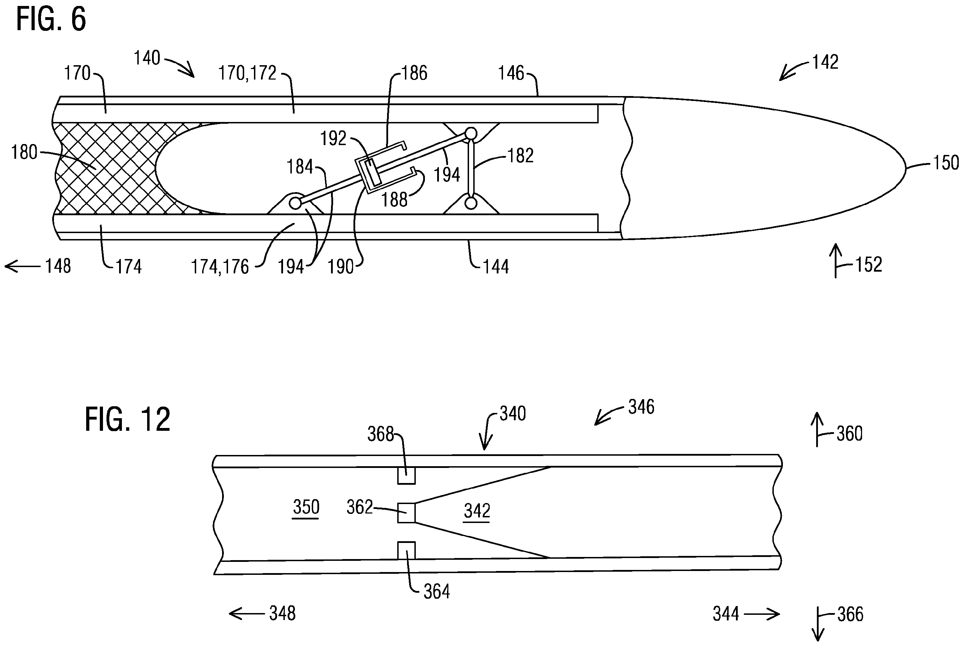

FIG. 12 shows an example embodiment of another type of structural member 340. Here again, this example embodiment uses structure of the wind turbine blade to provide initial resistance to bending up to the threshold amount, after which the structural member adds to the resistance, yielding a wind turbine blade with a nonlinear response.

A spar stub 342 protrudes from the tip 344 of the wind turbine blade 346 toward the base 348 in the interior 350 of the wind turbine blade 346. Deflection of the tip 344 in the first direction 360 moves a contact 362 on the spar stub 342 toward a first stop 364. Upon reaching a threshold amount of deflection the contact 362 abuts the first stop 364. Further deflection of the tip 344 requires the spar stub 342 to also deflect/bend. Likewise, deflection of the tip 344 in the second direction 366 moves the contact 362 toward a second stop 368. Upon reaching a threshold amount of deflection the contact 362 abuts the second stop 368. Further deflection of the tip 344 again requires the spar stub 342 to also deflect/bend. As such, deflection up to the threshold amount is resisted by the wind turbine blade 346, and further deflection is further resisted by the spar stub 342. This amounts to a nonlinear response of the wind turbine blade 346. Such an embodiment may be conveniently integrated in a joint of a modular blade.

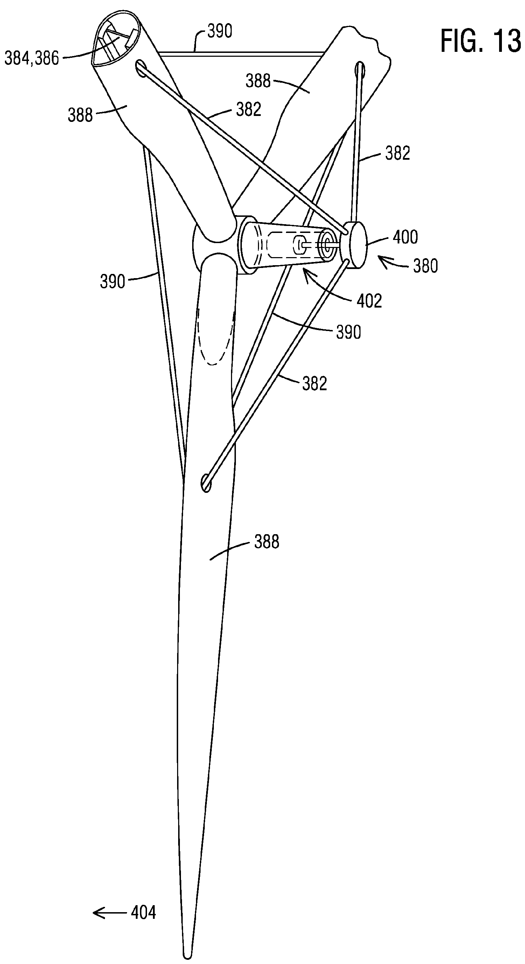

FIG. 13 shows another structural member 380 comprising an active cable-stayed root to limit loads on a pitch bearing. Once again, this example embodiment uses structure of the wind turbine blade to provide initial resistance to bending up to the threshold amount, after which the structural member adds to the resistance, yielding a wind turbine blade with a nonlinear response.

Centrifugal and aero forces are reacted by cables 382 connect to a respective spar 384, e.g. connected to the spar web 386 of a respective wind turbine blade 388 at approximately twenty-five percent (25%) chord. Connecting cables 390 may also connect adjacent blades to each other. Cables 382 converge at a hub 400 via, for example, a pulley arrangement in a manner that avoids bending loads on a hub extender 402 to which the cables 382 are secured. The hub extender 402 may include a post-tensioning actuator and/or damper that can unload the cables 382 for pitch-tofeather and load them for unfeathered operation in the variable-speed region. The cables 382 may be connected to the spar 384 through lugs connected to the spar web 386, which allows each cable 382 to rotate in the lug during pitching. The hub extender 402 may include damping elements and may tension only after a predetermined amount of blade deflection in a first direction 404 away from the cables 382 and toward a tower (not shown). Accordingly, deflection of the wind turbine blade 388 is resisted only by the wind turbine blade 388 itself until the threshold amount of deflection is reached, after which additional deflection is also resisted by the cables 382. This amounts to a nonlinear response of the wind turbine blade 388.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the scope of the appended claims.

**Claims**

1. A wind turbine blade (12) comprising:

   a first stringer (40) ;
   a second stringer (42) ;
   a rigid tie (44) pivotally secured to the first stringer (40) and pivotally secured to the second stringer (42); and
   a tension tie (46) secured to the first stringer(40) and the second stringer(42) and arranged to experience tension during increasing lateral displacement between the first stringer (40) and the second stringer (42) as the wind turbine blade bends in a first direction
   **characterized in that** the tension tie (46) is configured to transition from being untensioned to being in tension during the increasing lateral displacement.

2. The wind turbine blade of claim 1, further comprising a second tension tie (46) secured to the first stringer (40) and to the second stringer (42) and arranged to experience tension during increasing lateral displacement between the first stringer and the second stringer when the wind turbine blade bends in a second direction (50) that is opposite the first direction (48).

3. The wind turbine blade of claim 1, **characterized in that** the tension tie (46) is configured to be in tension prior to any lateral displacement.

4. The wind turbine blade of claim 1, **characterized in that** the tension tie (46) comprises a damper that damps the increasing lateral displacement, and a travel stop that stops the increasing lateral displacement after a threshold amount of lateral displacement.

5. The wind turbine blade of claim 1, further comprising a first spar cap (170) comprising the first stringer (172), and a second spar cap (174) comprising the second stringer (176).

6. The wind turbine blade of claim 5, further comprising a spar web (180) secured to the first spar cap (170) and to the second spar cap (174) and disposed toward a base of the wind turbine blade, **characterized in that** the tension tie is disposed toward a tip of the wind turbine blade.

7.  The wind turbine blade of claim 5, further comprising a spar web spanning from a pressure side to a suction side of the wind turbine blade, **characterized in that** the spar web is disposed toward a leading edge (222) of the wind turbine blade and the tension tie is disposed toward a trailing edge (226) of the wind turbine blade.

8.  The wind turbine blade of claim 1, further comprising a first spar cap (274) comprising the first stringer (270), and a trailing edge reinforcement (276) comprising the second stringer (272).

9.  The wind turbine blade of claim 1 **characterized in that** the structural member (10) is configured to respond to deflection of the structural member by providing a resisting stiffness that resists the deflection, wherein a magnitude of the resisting stiffness is configured to increase with increasing deflection, wherein the response is configured to include an abrupt increase in the resisting stiffness during the increasing deflection, and wherein the tension tie effects the abrupt increase.

10. The wind turbine blade of claim 9, further comprising a spar assembly (30) comprising the structural member.

11. The wind turbine blade of claim 10, the spar assembly further comprising a spar web disposed toward a base of the wind turbine blade, and the structural member disposed toward a tip of the wind turbine blade.

12. The wind turbine blade of claim 10, the spar assembly further comprising a spar web disposed toward a leading edge of the wind turbine blade, and the structural member disposed toward a trailing edge of the wind turbine blade.

13. The wind turbine blade of claim 9, further comprising a spar cap comprising the first stringer and a trailing edge reinforcement comprising the second stringer.

14. The wind turbine blade of the claim 1 **characterized in that** during deflection of the structural member the first stringer location (82) moves away from the second stringer location (84);

    wherein the tension tie (70) is configured to generate a first resisting stiffness as the first stringer location (82) moves away from the second stringer location (84); and
    wherein the first resisting stiffness causes a nonlinear increase in a bending stiffness of the structural member during deflection in a first direction.

15. The wind turbine blade of claim 14, the structural member further comprising a second tension tie (90) secured to the first stringer (40) and to the second stringer (42) and that is configured to generate a second resisting stiffness as the first stringer location (92)moves toward the second stringer location (94), **characterized in that** the second resisting stiffness causes a nonlinear increase in a bending stiffness of the structural member during deflection in the second direction.

16. The wind turbine blade of claim 14, further comprising a spar assembly comprising the structural member (10).

17. The wind turbine blade of claim 16, the spar assembly further comprising a shear web toward a base of the wind turbine blade, **characterized in that** the structural member is disposed toward a tip of the wind turbine blade.

18. The wind turbine blade of claim 16, the spar assembly comprising a shear web disposed toward a leading edge of the wind turbine blade, **characterized in that** the tension tie is disposed toward a trailing edge of the wind turbine blade.

**Patentansprüche**

1.  Rotorblatt (12), umfassend:

    einen ersten Stringer (40);
    einen zweiten Stringer (42);
    eine starre Strebe (44), die am ersten Stringer (40) verschwenkbar befestigt ist und am zweiten Stringer (42) verschwenkbar befestigt ist; und
    eine Zugstrebe (46), die am ersten Stringer (40) und am zweiten Stringer (42) befestigt und dazu angeordnet ist, während einer zunehmenden lateralen Verschiebung zwischen dem ersten Stringer (40) und dem zweiten Stringer (42), wenn sich das Rotorblatt in eine erste Richtung biegt, eine Spannung zu erfahren, **dadurch gekennzeichnet, dass** die Zugstrebe (46) dazu ausgelegt ist, während der zunehmenden lateralen Verschiebung von einem ungespannten zu einem gespannten Zustand überzugehen.

2. Rotorblatt nach Anspruch 1, ferner umfassend eine zweite Zugstrebe (46), die am ersten Stringer (40) und am zweiten Stringer (42) befestigt und dazu angeordnet ist, während einer zunehmenden lateralen Verschiebung zwischen dem ersten Stringer und dem zweiten Stringer, wenn sich das Rotorblatt in eine der ersten Richtung (48) entgegengesetzte zweite Richtung (50) biegt, eine Spannung zu erfahren.

3. Rotorblatt nach Anspruch 1, **dadurch gekennzeichnet, dass** die Zugstrebe (46) dazu ausgelegt ist, vor jeglicher lateraler Verschiebung gespannt zu sein.

4. Rotorblatt nach Anspruch 1, **dadurch gekennzeichnet, dass** die Zugstrebe (46) einen Dämpfer, der die zunehmende laterale Verschiebung dämpft, und einen Bewegungsstopper, der die zunehmende laterale Verschiebung nach einem Schwellenwert der lateralen Verschiebung stoppt, umfasst.

5. Rotorblatt nach Anspruch 1, ferner umfassend einen den ersten Stringer (172) umfassenden ersten Holmgurt (170) und einen den zweiten Stringer (176) umfassenden zweiten Holmgurt (174).

6. Rotorblatt nach Anspruch 5, ferner umfassend einen Holmsteg (180), der am ersten Holmgurt (170) und am zweiten Holmgurt (174) befestigt ist und zur Wurzel des Rotorblatts hin angeordnet ist, **dadurch gekennzeichnet, dass** die Zugstrebe zur Spitze des Rotorblatts hin angeordnet ist.

7. Rotorblatt nach Anspruch 5, ferner umfassend einen Holmsteg, der von einer Druckseite zu einer Saugseite des Rotorblatts verläuft, **dadurch gekennzeichnet, dass** der Holmsteg zur Vorderkante (222) des Rotorblatts hin angeordnet ist und die Zugstrebe zur Hinterkante (226) des Rotorblatts hin angeordnet ist.

8. Rotorblatt nach Anspruch 1, ferner umfassend einen den ersten Stringer (270) umfassenden ersten Holmgurt (274) und eine den zweiten Stringer (272) umfassende Hinterkantenverstärkung (276) .

9. Rotorblatt nach Anspruch 1, **dadurch gekennzeichnet, dass** das Strukturelement (10) dazu ausgelegt ist, durch Vorsehen einer der Ablenkung standhaltenden Widerstandssteifigkeit auf die Ablenkung des Strukturelements zu reagieren, wobei das Ausmaß der Widerstandssteifigkeit dazu ausgelegt ist, mit zunehmender Ablenkung zuzunehmen, wobei die Reaktion dazu ausgelegt ist, eine abrupte Zunahme der Widerstandssteifigkeit während der zunehmenden Ablenkung zu umfassen, und wobei die Zugstrebe die abrupte Zunahme bewirkt.

10. Rotorblatt nach Anspruch 9, ferner umfassend eine das Strukturelement umfassende Holmanordnung (30).

11. Rotorblatt nach Anspruch 10, wobei die Holmanordnung ferner einen Holmsteg umfasst, der zur Wurzel des Rotorblatts hin angeordnet ist, und wobei das Strukturelement zur Spitze des Rotorblatts hin angeordnet ist.

12. Rotorblatt nach Anspruch 10, wobei die Holmanordnung ferner einen Holmsteg umfasst, der zur Vorderkante des Rotorblatts hin angeordnet ist, und wobei das Strukturelement zur Hinterkante des Rotorblatts hin angeordnet ist.

13. Rotorblatt nach Anspruch 9, ferner umfassend einen den ersten Stringer umfassenden Holmgurt und eine den zweiten Stringer umfassende Hinterkantenverstärkung.

14. Rotorblatt nach Anspruch 1, **dadurch gekennzeichnet, dass** sich während der Ablenkung des Strukturelements die erste Stringerposition (82) von der zweiten Stringerposition (84) wegbewegt;

wobei die Zugstrebe (70) dazu ausgelegt ist, eine erste Widerstandssteifigkeit zu erzeugen, während sich die erste Stringerposition (82) von der zweiten Stringerposition (84) wegbewegt; und wobei die erste Widerstandssteifigkeit während der Ablenkung in eine erste Richtung eine nichtlineare Zunahme der Biegesteifigkeit des Strukturelements bewirkt.

15. Rotorblatt nach Anspruch 14, wobei das Strukturelement ferner eine zweite Zugstrebe (90) umfasst, die am ersten Stringer (40) und am zweiten Stringer (42) befestigt ist und dazu ausgelegt ist, eine zweite Widerstandssteifigkeit zu erzeugen, während sich die erste Stringerposition (92) zur zweiten Stringerposition (94) hin bewegt, **dadurch**

**gekennzeichnet, dass** die zweite Widerstandssteifigkeit während der Ablenkung in die zweite Richtung eine nichtlineare Zunahme der Biegesteifigkeit des Strukturelements bewirkt.

16. Rotorblatt nach Anspruch 14, ferner umfassend eine das Strukturelement (10) umfassende Holmanordnung.

17. Rotorblatt nach Anspruch 16, wobei die Holmanordnung ferner einen Schubsteg zur Wurzel des Rotorblatts hin umfasst, **dadurch gekennzeichnet, dass** das Strukturelement zur Spitze des Rotorblatts hin angeordnet ist.

18. Rotorblatt nach Anspruch 16, wobei die Holmanordnung einen Schubsteg umfasst, der zur Vorderkante des Rotorblatts hin angeordnet ist, **dadurch gekennzeichnet, dass** die Zugstrebe zur Hinterkante des Rotorblatts hin angeordnet ist.

## Revendications

1. Pale d'éolienne (12) comprenant :

   un premier raidisseur (40) ;
   un deuxième raidisseur (42) ;
   une attache rigide (44) fixée d'une manière pivotante au premier raidisseur (40) et fixée d'une manière pivotante au deuxième raidisseur (42) ; et
   une attache de tension (46) fixée au premier raidisseur (40) et au deuxième raidisseur (42) et agencée pour subir une tension pendant l'augmentation du déplacement latéral entre le premier raidisseur (40) et le deuxième raidisseur (42) lorsque la pale d'éolienne se plie dans un premier sens,
   **caractérisée en ce que** l'attache de tension (46) est configurée pour passer d'un état détendu à état tendu pendant l'augmentation du déplacement latéral.

2. Pale d'éolienne selon la revendication 1, comprenant, en outre, une deuxième attache de tension (46) fixée au premier raidisseur (40) et au deuxième raidisseur (42) et agencée pour subir une tension pendant l'augmentation du déplacement latéral entre le premier raidisseur et le deuxième raidisseur lorsque la pale d'éolienne se plie dans un deuxième sens (50) qui est opposé au premier sens (48).

3. Pale d'éolienne selon la revendication 1, **caractérisée en ce que** l'attache de tension (46) est configurée pour être tendue avec tout déplacement latéral.

4. Pale d'éolienne selon la revendication 1, **caractérisée en ce que** l'attache de tension (46) comprend un amortisseur qui amortit l'augmentation du déplacement latéral, et un limiteur de course qui stoppe l'augmentation du déplacement latéral après un montant seuil de déplacement latéral.

5. Pale d'éolienne selon la revendication 1, comprenant, en outre, une première semelle de longeron (170) comprenant le premier raidisseur (172), et une deuxième semelle de longeron (174) comprenant le deuxième raidisseur (176).

6. Pale d'éolienne selon la revendication 5, comprenant, en outre, une âme de longeron (180) fixée à la première semelle de longeron (170) et à la deuxième semelle de longeron (174) et disposée vers une base de la pale d'éolienne, **caractérisée en ce que** l'attache de tension est disposée vers une extrémité de la pale d'éolienne.

7. Pale d'éolienne selon la revendication 5, comprenant, en outre, une âme de longeron s'étendant d'un côté de pression à un côté d'aspiration de la pale d'éolienne, **caractérisée en ce que** l'âme de longeron est disposée vers un bord d'attaque (222) de la pale d'éolienne et l'attache de tension est disposée vers un bord de fuite (226) de la pale d'éolienne.

8. Pale d'éolienne selon la revendication 1, comprenant, en outre, une première semelle de longeron (274) comprenant le premier raidisseur (270), et un renforcement de bord de fuite (276) comprenant le deuxième raidisseur (272).

9. Pale d'éolienne selon la revendication 1, **caractérisée en ce que** l'élément structurel (10) est configuré pour répondre à la flexion de l'élément structurel en fournissant une rigidité de résistance qui résiste à la flexion, dans laquelle une grandeur de la rigidité de résistance est configurée pour augmenter avec l'augmentation de la flexion, dans laquelle la réponse est configurée pour inclure une augmentation brusque de la rigidité de résistance pendant l'augmentation de la flexion, et dans laquelle l'attache de tension effectue l'augmentation brusque.

10. Pale d'éolienne selon la revendication 9, comprenant, en outre, un ensemble de longeron (30) comprenant l'élément structurel.

11. Pale d'éolienne selon la revendication 10, l'ensemble de longeron comprenant, en outre, une âme de longeron disposée vers une base de la pale d'éolienne, et l'élément structurel disposé vers une extrémité de la pale d'éolienne.

12. Pale d'éolienne selon la revendication 10, l'ensemble de longeron comprenant, en outre, une âme de longeron disposée vers un bord d'attaque de la pale d'éolienne, et l'élément structurel disposé vers un bord de fuite de la pale d'éolienne.

13. Pale d'éolienne selon la revendication 9, comprenant, en outre, une semelle de longeron comprenant le premier raidisseur et un renforcement de bord de fuite comprenant le deuxième raidisseur.

14. Pale d'éolienne selon la revendication 1, **caractérisée en ce que** pendant la flexion de l'élément structurel, l'emplacement du premier raidisseur (82) se déplace à distance de l'emplacement du deuxième raidisseur (84) ;

dans laquelle l'attache de tension (70) est configurée pour générer une première rigidité de résistance lorsque l'emplacement du premier raidisseur (82) se déplace à distance de l'emplacement du deuxième raidisseur (84) ; et

dans laquelle la première rigidité de résistance entraîne une augmentation non linéaire d'une rigidité de flexion de l'élément structurel pendant la flexion dans un premier sens.

15. Pale d'éolienne selon la revendication 14, l'élément structurel comprenant, en outre, une deuxième attache de tension (90) fixée au premier raidisseur (40) et au deuxième raidisseur (42) et qui est configurée pour générer une deuxième rigidité de résistance lorsque l'emplacement du premier raidisseur (92) se déplace vers l'emplacement du deuxième raidisseur (94), **caractérisée en ce que** la deuxième rigidité de résistance provoque une augmentation non linéaire d'une rigidité de flexion de l'élément structurel pendant la flexion dans le deuxième sens.

16. Pale d'éolienne selon la revendication 14, comprenant, en outre, un ensemble de longeron comprenant l'élément structurel (10) .

17. Pale d'éolienne selon la revendication 16, l'ensemble de longeron comprenant, en outre, une âme de cisaillement vers une base de la pale d'éolienne, **caractérisée en ce que** l'élément structurel est disposé vers une extrémité de la pale d'éolienne.

18. Pale d'éolienne selon la revendication 16, l'ensemble de longeron comprenant une âme de cisaillement disposée vers un bord d'attaque de la pale d'éolienne, **caractérisée en ce que** l'attache de tension est disposée vers un bord de fuite de la pale d'éolienne.

FIG. 1

FIG. 2

EP 3 526 468 B1

# FIG. 3

# FIG. 4

FIG. 5

A

150

152

146

140

170,172

194

188

186

182

192

148

170

174,176

180

190

174

194

144

A

EP 3 526 468 B1

FIG. 6

FIG. 12

EP 3 526 468 B1

FIG. 7

FIG. 9

FIG. 8

EP 3 526 468 B1

## FIG. 10

302

320

322

310

292

11

306

306

306

304

292

304

300

304

330

292

## FIG. 11

312

316

292

314

304

318

306

332

300

304

332

306

334

292

FIG. 13

**EP 3 526 468 B1**

## REFERENCES CITED IN THE DESCRIPTION

### Patent documents cited in the description

- US 2013108453 A1